Europäisches Patentamt

European Patent Office

Office européen des brevets

(11) Publication number: **0 435 766 A2**

# EUROPEAN PATENT APPLICATION

(21) Application number: 90403756.1

(22) Date of filing: 24.12.90

(51) Int. Cl.⁵: **C01B 31/00, B01J 20/00, C02F 1/28, C09K 3/32, B01D 17/022, C11B 3/10**

The title of the invention has been amended (Guidelines for Examination in the EPO, A-III, 7.3).

(30) Priority: 25.12.89 IL 92872

(43) Date of publication of application:
03.07.91 Bulletin 91/27

(84) Designated Contracting States:
**BE DE DK FR GB IT NL**

(71) Applicant: **Technion Research & Development Foundation Ltd.**
**Technion City**
**IL-32000 Haifa(IL)**

Applicant: **Maryasin, Ilya**
**4/4 Ha-gome Street**
**Jerusalem(IL)**

Applicant: **Shelef, Gedaliah**
**9 Ayalon Street**
**Haifa(IL)**

Applicant: **Sandbank, Enrico**
**7 Boaz Street**
**Haifa(IL)**

(72) Inventor: **Maryasin, Ilya**
**4/4 Ha-gome Street**
**Jerusalem(IL)**
Inventor: **Sandbank, Enrico**
**7 Boaz Street**
**Haifa(IL)**
Inventor: **Shelef, Gedaliah**
**9 Ayalon Street**
**Haifa(IL)**

(74) Representative: **Portal, Gérard et al**
**Cabinet Beau de Loménie 55, rue d'Amsterdam**
**F-75008 Paris(FR)**

(54) **Structure of expanded graphite and its use in the removal of oil from water.**

(57) A hydrophobic and lyophobic particular vermicular structure of expanded graphite, possessing the property of absorbing large amounts of petroleum products is described. This expanded graphite is characterized by three main properties: (a) a specific density in the range of 0.003 - 0.1 g/ml; (b) a surface area in the range of 50-200 m2/g; and (c) closed pores in the range of 3% to 20%. It can be used in the form of particulate, pillows, blankets, booms or as a filter medium. The oil absorbed onto the expanded graphite can be released by pressure or recovered by solvent extraction.

The present invention relates to a Particular structural form of expanded graphite. More particularly, the invention relates to a particular structure of expanded graphite possessing the property of absorbing large amounts of mineral oil, vegetable oil or petroleum products from water media.

## BACKGROUND OF THE INVENTION

Graphite is a well-known mineral consisting of the element carbon, crystallizing in the hexagonal system. It is black, opaque and very soft being widely used due to its property of a good conductor of electricity. It has a greasy feel and rubs off on anything it touches, leaving a black mark. As an artificial product, graphite is known as scales in gray pig iron, and as graphitic pcwder formed in iron furnaces. St is also produced on a large scale in electric furnaces. It is widely used in refractory, as a constituent in the lubricants manufacture, foundry facings, brake linings, packings, pencils, batteries and carbon brushes. Active carbon is well-known for its absorption property of various solvents or as a filter media. However, it is unsuitable for absorption of oil or petroleum products from water, since after absorption it sinks and cannot be easily removed.

The same problem of sinking exists with magnesium oxide, also known for its absorption property. But, again, due to its sinking it cannot be used for absorption of petroleum products spillage, on water.

Polyurethane foam in the form of small pieces was suggested in a recent French Patent No. 2,605,014 to be useful for absorbing oil from water. However, the absorption power of urethane is quite low and therefore the ratio of polyurethane to oil is high. Moreover, a significant part of the urethane powder is wasted.

Expanded graphite was disclosed in a number of references possessing improved properties for specific uses. Thus in a review by D.D.L. Chung (Journal of Material Science 22, (1987), p. 4190-8) expanded graphite, obtained by exfoliation, is described by a process in which graphite expands by up to hundreds of times along the "C" axis, resulting in a puffed-up material with a low density and a high temperature resistance. This type of exfoliated graphite is mentioned to be useful for high-temperature gaskets, packings, fire extinguisher agent, thermal insulator, as a conductive resin composite - in composition with a thermoplastic resin - and as a chemical reagent. It is also mentioned its use as an adsorbent for gas chromatography and as a substrate for the study of adsorbed films.

In a Russian Patent, in which one of the inventors is co-inventor in the present invention, expanded graphite was utilized in greases and described to possess improved shear stress, viscosity and colloidal stabilities.

According to the Japanese Kokai Patent Application No. 63,252,978 (cf. C.A. 110,159373k) expanded graphite is produced by treating powder graphite with an expanding agent and subjected to an electromagnetically induced heat treatment to expand the formed intercalation graphite compound.

In a very recent European Patent No. 343,483, an expanded graphite is suggested as a self-lubricating material to be used for bearing bushes, slide plates, pump vanes, etc. The material suggested comprises a plastic matrix containing 3% - 60% (by wt) of expanded graphite, a silicone fluid and a polyester. It is claimed that bearing components produced from the expanded graphite are characterized by their good dry wear resistance, low friction and high mechanical strength.

In another Japanese Patent Application No. 8869705, Kisch graphite is mixed with natural graphite at 90°C and treated with sulfuric acid in the presence of an oxidizing agent (such as a peroxide), heated at a temperature above 800°C and rolled into sheets. It is claimed that the resulted sheets possess high resilience and chemical resistance.

It is an object of the present invention to provide a particular structure of expanded graphite possessing a high absorption power of mineral oils, vegetable oils or petroleum products. It is another object of the present invention to provide a particular structure of expanded graphite, which has the property of absorbing mineral oils, vegetable oils or petroleum products, being able subsequently to release the absorbed materials by simple squeezing.

## BRIEF DESCRIPTION OF THE INVENTION

The invention relates to a hydrophobic and lyophobic particular vermicular structure of expanded graphite having the following physical properties:
- a specific density in the range of 0.003 - 0.1 g/ml;
- surface area in the range of 50 - 200 m2/g; and
- closed pores in the range of 3% - 20%,

the expanded graphite possessing the property of absorbing large amounts of petroleum products, mineral oils and vegetable oils from water medium. The absorbed materials can be easily released from the loaded expanded graphite by a simple squeezing operation.

The particular structure of expanded graphite is most useful for absorption of petroleum products from water surfaces such as oceans, lakes, seas and waste water reservoirs. In addition to its high absorption capacity towards oil the expanded graphite with the above physical properties, does not absorb water, it floats on the water and does not sink.

In this manner the oil-loaded expanded graphite can be easily removed by mechanical means and if required, the absorbed oil can be recovered by squeezing. In case that a complete recovery is required, a further solvent extraction operation may be applied.

Oil removal from water surfaces is an important task required in industry as well as in maritime activities. As known, the presence of petroleum products in oceans or seas, resulted from spillages of tankers carrying them, is a serious burden and most undesirable from an environment point of view. The invention is also envisaged for a broad number of other uses such as: removal of oils from industrial waste water, removal of oils from emulsions, removal of oil soluble substances which are present in final products such as in pesticides, etc.

The removal of oils by absorption, has some important advantages over mechanical means such as traps which are commonly used. The main disadvantage of oil traps, is the fact that such traps contain oil which constitutes a serious burden to any biological treatment and produces oily deposits in equipment and pipes.

Another aspect of the present invention, is for the recovery of valuable oily substances from waste water such as encountered in the cosmetic, or food industries. This recovery is possible due to the fact that expanded graphite is completely inert, and valuable oily substances can be easily released and recovered by squeezing at a moderate pressure. If necessary, and especially if it is economically, the remaining oil can be recovered by solvent extraction.

The physical properties of the expanded graphite in order to be useful for the present invention are:

- Specific density in the range of 0.003-0.1 g/ml and most preferably in the range of 0.005-0.002 g/ml.
- Surface area in the range of 50-200 m2/g and most preferably in the range of 80-150 m2/g.
- Closed pores in the range of 3-20% and most preferably in the range of 8%-10%.

An important characteristic of the expanded graphite is the fact that it does not pollute water and floats on the water. This is connected with characteristic features that up to 20% of its pores are closed.

The amount of expanded graphite to be spread on the water depends, of course, on the amount of oil to be collected from the water. Generally, this amount is in the range of between 1 g and 100 g per square meter of the water area.

The equipment useful for spreading the expanded graphite may be selected from known machines such as employed in agriculture or in fire extinguishing equipment. The time of contact required for an efficient absorption of the oil by the expanded graphite varies between 15 minutes to several hours, depending on the particular type of oil.

The expanded graphite can be spread on the surface of the water in the form of granules, or any other particulate form. It can also be used in pillows, blankets or booms which are permeable to water and contain the expanded graphite particles.

In case of industrial wastes, it is suggested to convey the waste into a column filled with pulverized expanded graphite, as an upflow stream.

The expanded graphite, possessing the particular physical properties according to the present invention, can also be utilized as a filter medium. This filter can be obtained by pressing the particles of expanded graphite at a pressure of about 50 kg/cm into a layered sheet.

The expanded graphite possessing the vermicular structure to be used in the present invention, is obtained by a process which involves two consequent steps. In the first step, raw graphite particles are oxidized in an acidic medium. A typical example is the oxidation by a solution of an alkali bichromate in a sulfuric acid solution. In the second step, the resulted product from the previous step is heated at a temperature above 800°C and preferably above 900°C. From the resulted product, the particles having a size in the range of 0.5 - 3 mm are separated, their physical properties being in the range suitable for the present invention as mentioned above.

The invention will be hereafter illustrated by a number of Examples, being understood that no limitation should be deduced, the Examples being presented only for a better understanding of the invention as given in the above description.

## EXAMPLE 1

Graphite particles in the range of 0.1 to 0.2 mm were treated with a concentrated solution of sodium bichromate mixed with sulfuric acid.

The solid particles were separated, washed with water from the acidic adhered solution and dried.

The treated graphite particles were heated at 900°C for one minute.

The particles having a size in the range of 0.5 - 3 mm were removed by screening and found to possess the following physical properties:

- surface area: 150 m2/g.
- specific density: 0.005 g/ml.

- closed pores: 15%.

Particles of the expanded graphite as treated above were spread at a rate of 1 mg/cm over a basin of water which contained olive oil (d = 0.80 g/ml). The volume ratio oil: water was 1:50.

It was found that the particles of expanded graphite collected from the surface of the basin, absorbed 49 g olive oil per g of graphite.

The olive oil - loaded expanded graphite particles were squeezed in a hydraulic press, at a pressure of 10 kg/cm, wherein 40% of the absorbed oil were recovered.

**EXAMPLE 2**

The experiment as in Example 1 was repeated, wherein the same expanded graphite particles were spread over a basin containing a mineral oil of a density 0.866 g/ml, at the same rate.

It was found that the expanded graphite particles separated, contained 52 g oil per g of expanded graphite.

**EXAMPLE 3**

Expanded graphite particles, as prepared in Example 1, were compressed at a pressure of 50 kg/cm obtaining a filter sheet. The filter sheet was inserted in a vertical column, and an aqueous emulsion upflow, containing 2% olive oil, was passed through it.

It was found that 75% of the oil was absorbed, the weight ratio between oil: graphite being 32.

**Claims**

1. A hydrophobic and lyophobic particular vermicular structure of expanded graphite, possessing the following physical characteristics:
   - a specific density in the range of 0.003-0.1 g/ml;
   - a surface area in the range of 50-200 m2/g; and
   - closed pores in the range of 3-20%,
   having the property of absorbing large amounts of petroleum products, mineral oils and vegetable oils from water media.

2. The particular vermicular structure of expanded graphite according to claim 1, having a specific density in the range of 0.005-0.02 g/ml, a surface area in the range of 80-150 m2/g and closed pores in the range of 8%-10%.

3. The particular vermicular structure of expanded graphite, according to claim 1, having a particle size in the range of 0.5-3 mm.

4. The particular vermicular structure of expanded graphite, according to claim 1, used in the form of particulate, pillows, blankets or booms.

5. The particular vermicular structure of expanded graphite, according to claim 1, compressed at a pressure of 50 kg/cm to be used as a filter sheet.

6. The particular vermicular structure of expanded graphite, according to claim 1, wherein the oil absorbed therein is released by pressure.

7. The particular vermicular structure of expanded graphite, according to claim 1, wherein the oil absorbed therein is recovered by solvent extraction

8. The particular vermicular structure of expanded graphite, according to claim 1, produced by treating graphite with a concentrated solution of an oxidizing agent in sulfuric acid and subsequently heated at a temperature of above 800° C.

9. The particular structure of expanded graphite according to claim 8, wherein said oxidizing agent is an alkali bichromate.